Europäisches Patentamt

European Patent Office

Office européen des brevets

(19)

(11) Publication number: **0 401 955**
**A1**

# (12) EUROPEAN PATENT APPLICATION

(21) Application number: **90301581.6**

(22) Date of filing: **14.02.90**

(51) Int. Cl.⁵: **A23N 15/08**

(30) Priority: **08.06.89 US 363530**

(43) Date of publication of application:
**12.12.90 Bulletin 90/50**

(84) Designated Contracting States:
**DE ES FR GB IT SE**

(71) Applicant: **DALGETY PRODUCE, INC**
**126 Sun Street**
**Salinas CA 93901(US)**

(72) Inventor: **Fischer, Rich**

**797 Seely Avenue**
**Aromas, CA 95004(US)**
Inventor: **Silva, Richard**
**235 Nestles**
**Gonzales, CA 93926(US)**
Inventor: **Welton, Henry P.**
**6515 Princevalle**
**Gilroy, CA 95020(US)**

(74) Representative: **Brereton, Paul Arthur et al**
**REDDIE & GROSE 16 Theobalds Road**
**London WC1X 8PL(GB)**

(54) **Apparatus for peeling garlic.**

(57) Garlic cloves to have their outer inedible skins removed are placed on a shake table 14 which spreads them generally into a one-clove layer and moves them toward an exit edge 16. The cloves drop from shake table onto a sloped feed tray 18 having a number of downwardly extending parallel troughs 20. Underneath each trough is a tube 48 having a flexible cylinder 50 secured to its lower end which receives cloves from its associated trough 20. A continuous belt 52 driven along a path to present an upper surface has a number of openings 58 within each of which an open-topped product cup 24 is secured. The flexible cylinder 50 contacts the belt surface and is closed off between product cups 24 and released to feed cloves into the cups upon alignment therewith. A plate 30 is spaced just above the belt 52 and has openings through which nozzles 28 extend to provide a timed blast of pressurised air into the cups 24 for peeling the cloves. The outer skins are removed from the space above the belt 52 by a suction fan.

FIG. 1

EP 0 401 955 A1

The present invention relates to apparatus and a method for removing the outer skin from garlic cloves, shallots or small onions.

Apparatus is available for removing the outer skins of onions making them ready for immediate use. In a know apparatus the individual onion bulbs are held by a cup-shaped holder and are subjected to a blast of pressurised air to remove the outer skin. In some apparatuses a preliminary step is performed in which the ends of the bulb are cut off prior to the removal of the outer skin. Examples of such onion peeling techniques are shown in US-A-3602279 and US-A-3485279.

On the other hand, equipment for removing the inedible outer layers of garlic cloves on a quantity basis has not been found to be commerically available or in the published literature. Peeling garlic poses a more complicated problem than peeling onions, in that, when originally picked, garlic is in the form of a bulb which has an outer inedible skin over it that must first be removed before the bulb can be broken down into its component cloves, after which the individual clove skins must be peeled off. Equipment is available for taking garlic bulbs and removing the outer skins to release the cloves, which equipment is sometimes referred to as a "cracker". However, these crackers do not remove the skin from the individual cloves, but merely the bulb skin.

According to the present invention there is provided apparatus for peeling the outer skin from garlic cloves, shallots or pearl onions comprising: a feeder for providing a continuous supply of cloves, shallots or pearl onions to a plurality of different outlets; a continuous belt driven along a closed path having an upper surface located immediately adjacent the outlets, said belt including a large number of openings, each of which is aligned with an outlet of the feeder as the belt moves along the path; indivdual cup means positioned within the belt openings, each having an upwardly directed open top when located on the belt upper surface; a plate located above and spaced from the upper surface of the belt and extending generally parallel thereto, the plate having a plurality of openings, cup means being brought into alignment with the openings in the plate as the belt moves past them; nozzle means in each plate opening and actuatable for directing pressurized air into the cup means and onto cloves, shallots or pearl onions contained therein; and means for moving air along and outwardly of the space between the belt upper surface of the belt and the facing surface of the plate to remove peeled outer skins.

The invention also provides a method of removing the inedible outer skins from garlic cloves, shallots or small onions, which comprises the steps of locating one or more garlic cloves, shallots or pearl onions with outer skins intact within an open-top container; positioning a plate closely spaced to the container open top; and directing a pressurized air stream onto the garlic cloves, shallots or pearl onions of sufficient pressure and spacing to tumble the cloves about and remove the outer skins from the cloves.

In carrying out the invention in its preferred form one may proceed as follows.

After a quantity of garlic bulbs have had the bulb skins removed by passing through a cracker, for example, the individual cloves with their respective outer skins still intact are moved along a shaker conveyor which locates the cloves in a generally planar arrangement of approximately one clove thickness. The cloves are then emptied from the shaker conveyor into a special feed tray having a plurality of elongated generally V-shaped troughs extending side-by-side and parallel to one another, and within which troughs individual moving lines of garlic cloves are formed. The tray is tilted downwardly somewhat and optionally shaken during use so that the cloves move along the troughs or channels in a generally single file manner.

Immediately under an end edge of the feeder tray is a feeding mechanism consisting of a plurality of separate tubular conduits, one for each tray trough, for receiving cloves that move off the feeder tray along a gravity path. The opposite end of each tubular conduit has a separate flexible sleeve affixed thereto, the lower end of which contacts the upper surface of a continuous belt conveyor having a plurality of product cups, the open tops of which are coextensive with the upper surface of the conveyor belt. As the conveyor belt moves past the feeder mechanism, the flexible sleeve upon encountering the upwardly directed product cup opening relaxes to allow at least one garlic clove to enter into a given cup. As the cup moves away from contact with the flexible sleeve, the flexible sleeve is then closed as a result of contact with the conveyor belt imperforate surface between product cups.

A flat preferably transparent plate substantially the width of the conveyor belt is located above and spaced slightly from the belt. The plate includes a set of spaced apart openings extending transversely across the plate, each of which can be brought into alignment with an underlying product cup as the conveyor belt moves along its path. In each of the plate openings there is located a separate air nozzle extending through the plate opening and positioned just slightly above the continuous belt. Timing apparatus actuates the nozzles to emit a blast of air each time an underlying product cup aligns with the plate opening. Adjacent each end of the plate there is a suction conduit which produces an air flow from the space between the plate and the upper surface of the continuous belt outwardly and through the conduits.

In operation, the cloves with outer skins on are fed along the shake table and the feeder tray troughs to drop into the feeder mechanism which, in turn, deposits at least one, and preferably several cloves, with skins on within each product cup. When a product cup moves into alignment with an air nozzle, a blast of air is emitted from a nozzle of predetermined orifice and directed into the cup causing the garlic cloves to interact with each other, the cup walls, and the covering plate to effect removal of the outer skins. The covering plate is relatively flexible so as to reduce clove bruising during deskinning.

Since the skins are less dense than the clove meat, the skins move into the space between the plate and the upper surface of the continuous belt where they are removed via the vacuum conduits. The deskinned cloves are then dumped onto a further conveyor belt there they are removed for packaging.

A preferred embodiment of the invention will now be described, by way of example, with reference to the accompanying drawings, in which:

FIG. 1 is a perspective view of the apparatus of the present invention;

FIG. 2 is an enlarged, partially fragmentary view of the feeder mechanism and feeder tray;

FIG. 3 is an end elevational sectional view taken along the lines 3-3 of FIG. 2;

FIG. 4A is a side elevational, partially schematic view showing operation of the feeder mechanism to deposit cloves into a product cup;

FIG. 4B shows the same feeder mechanism closing off clove feeding;

FIG. 5A shows an enlarged, partially fragmentary, side elevational view of a product cup located underneath an air nozzle;

FIG. 5B shows an enlarged view of several garlic cloves in a product cup being deskinned by a blast of air from the described apparatus; and

FIG. 6 is a schematic depiction of apparatus for timing the air blasts used in the present invention.

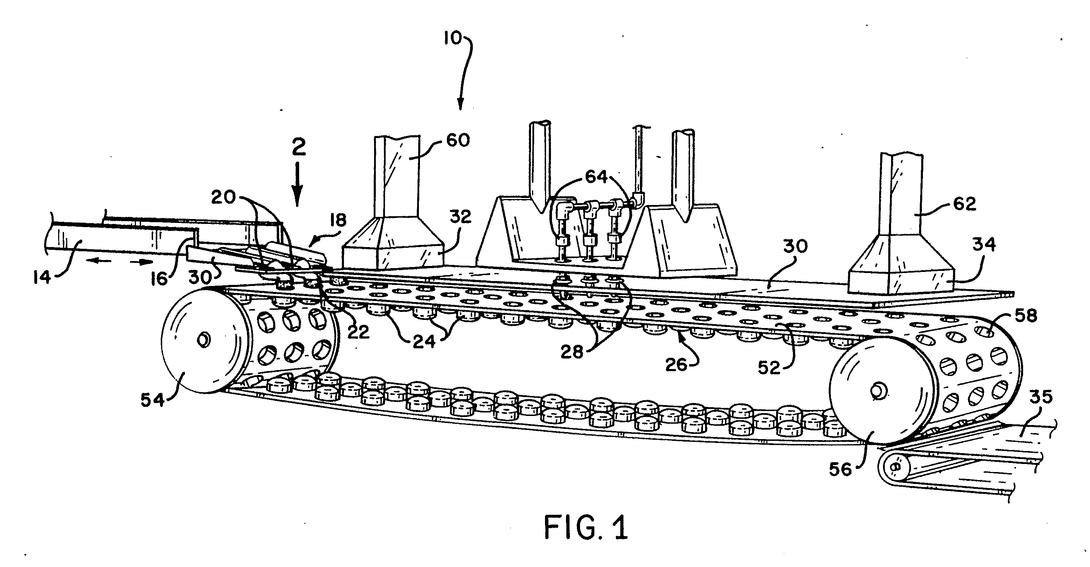

Turning now to the drawings and particularly FIG. 1, the apparatus for removing the inedible outer skins of garlic cloves on a quantity production basis is identified generally as 10. As to general operation of the invention, and without regard for detailed constructional aspects, garlic cloves 12 which have been "cracked" from garlic bulbs (not shown) in a conventional way are dumped onto a shake table 14 which essentially consists of an elongated flat upwardly facing surface which is shaken or vibrated in its plane such that the garlic cloves will move in a direction toward an exit edge or end 16. A feed tray 18 receives the garlic cloves from the table exit end 16 and arranges them into a plurality of parallel feed troughs 20 in the upper surface thereof.

The feed tray drops the cloves into a feeder mechanism 22 which, in turn, loads product cups 24 carried by a continuous belt conveyor 26 with at least one clove per cup. The so loaded product cups are conveyed to a central point along the conveyor where they are subjected to a sharp blast of pressurized air by one of the nozzles 28 which removes the garlic clove outer inedible skin and blows it, in the greater majority of cases, out of the product cup where it is removed by an air current produced between a cover plate and the continuous belt conveyor. The air currents are fed into suction hoods 32 and 34 located at the two opposite ends of plate 30 which remove the garlic clove skins. The deskinned garlic cloves are then dumped onto a finished product conveyor 35 where they are moved to a packaging or storage site (not shown).

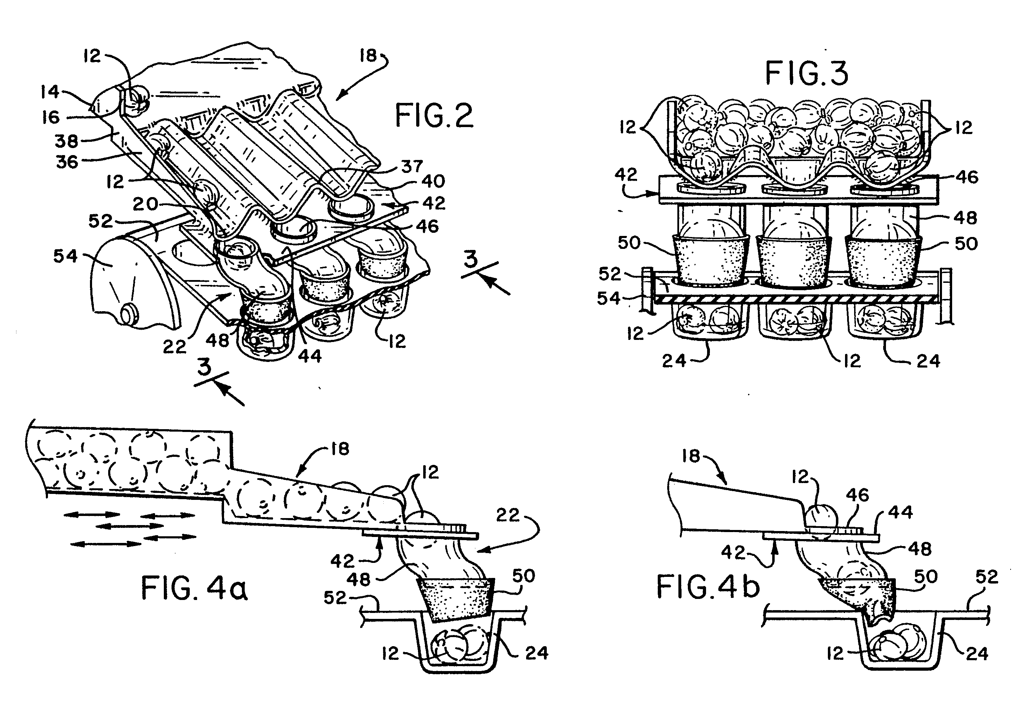

As can be seen best in FIG. 2, the feed tray 18 includes a generally rectangular sheet of metal formed into a plurality of troughs 20 arranged in side-by-side parallel relation with upstanding wall portions 37 separating adjacent troughs. The tray outer sides are formed into retaining edge walls such as the edge wall 36 which serve to enclose the two outermost troughs. The feed tray is mounted so as to have an entrance side 38 of the tray located slightly beyond and below the end 16 of the shake table 14. The tray exit side 40 is lower than the entrance side so that gravity assists movement of garlic cloves along the troughs. The width of each trough is such as to cause the garlic cloves to generally form into single file along the trough resulting in being fed from each tray in a one-by-one manner.

The clove feeder mechanism 22 is secured to the feed tray lower surface closely adjacent the exit side 40. More particularly, the mechanism includes a mounting plate 42 affixed to the tray lower surface and has a portion 44 extending outwardly beyond the tray exit edge. A plurality of openings 46 are formed in the plate portion just beyond the tray exit edge with each opening centered on an exit edge of an individual tray feed trough 20. A plurality of generally S-shaped tubes 48 each have an end received within a separate opening 46 from the plate lower side so as to extend downwardly from the plate 42 and away from the tray 18.

Each lower end of a tube 48 is provided with a flexible, generally rectangular sheet of plastics 50 rolled into a cylinder with slightly overlapping lateral edges. As shown in FIGS. 4A and 4B, the flexible plastic cylinder extends downwardly toward the continuous belt conveyor 26 and is of such a length as to extend into a product cup 24 when directly opposite the cup which allows the cylinder end to be open. When the imperforate portions of the conveyor 26 engage the cylinder lower end portion, it closes the end off by sliding the overlapping edge portions into greater overlapping relation. That is, the flexible plastic cylinders will allow feeding of the cloves when their ends are received within product cups, but are sealed off between cups to prevent clove feeding.

The conveyor 26 includes a continuous belt 52 mounted upon and driven by a pair of spaced apart rollers 54 and 56. Multiple sets of openings 58 are formed in the belt and arranged in transverse lines with each line including the same number of openings as there are tray feed troughs 20, and aligned therewith as the belt moves adjacent the tray and feeder mechanism.

Each opening 58 in the conveyor belt includes an open mouth product cup 24 secured therein with the open mouth directed outwardly of the belt. More particularly, the product cups are constructed of a rigid plastic having smooth inner wall surfaces and radiused junctions between the side walls and cup bottom.

A cover plate 30 preferably constructed of a flexible transparent plastic, is mounted slightly above and parallel to the conveyor 26 upper surface (FIG. 1). The flexibility is desired to reduce garlic clove bruising during deskinning. The plate spacing above the conveyor is sufficient to nsure no contact between them, but not so great as to allow a clove to become trapped in the space. At each end of the plate 30 there are located suction fan hoods 32 and 34 interconnected with respective stacks 60 and 62 which serve to move the air from the space between the plate and conveyor surface outwardly through the stacks.

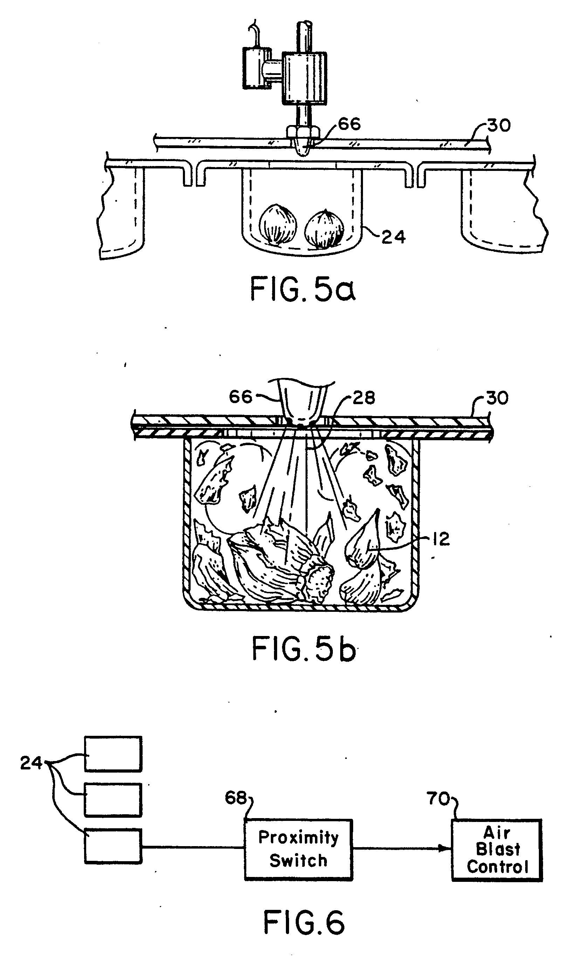

Intermediate the conveyor rollers 54 and 56 and mounted above the plate are a plurality of air pressure dispensing means 64, one for each product cup in a line of cups across the conveyor width. Each dispensing means includes a nozzle 66 which extends through an opening in the plate 30, and, when actuated, directs a high pressure air stream into a product cup (FIG. 5B). In practical construction and use the nozzle orifice size must be controlled, as well as the driving air pressure, and the spacing of the nozzle orifice to the cup bottom. In the usual case an orifice size of 11/32 inches (8.7mm) is satisfactory, however, a 5/16 inch (7.9mm) orifice has been used when the unskinned garlic cloves were relatively moist.

In addition, the pressure of air supplied to the dispensing means lies in the range of 65-80 pounds per square inch (450-550 k Pa). The higher pressure being used for garlic cloves which are relatively firm and the lower pressure for the softer ones. Still further, some adjustment in vertical location of the nozzles may be desired in that when the cloves are relatively large there is improved deskinning with the nozzles positioned at about 4 inches (100mm) from the cup bottom, while for the smaller cloves a vertical spacing of approximately 2 inches (50mm) is preferable.

It is necessary that the air pressure dispensing means only be actuated when a cup is located directly opposite a nozzle 66, and otherwise to be inactive. As shown in FIG. 6 this timed actuation of the dispensing means can be effected by use of a magnetic proximity switch 68, which on a product cup moving therepast energizes an air blast control 70. On the cup moving beyond the effective range of the proximity switch, the dispensing means is maintained inactive.

In use of the described garlic peeling apparatus, after cracking of the garlic bulbs the individual cloves with inedible outer skins are loaded onto the shake table 14 where they are spread out into a relatively thin layer (i.e., one clove thick). The shake table dumps the cloves onto the feed tray 18 where they are arranged within the troughs 20 forming a plurality of parallel clove feed lines. The cloves empty from the feed tray troughs individually into feeder mechanism tubes 48 from which they load the flexible cylinders 50. As the continuous belt conveyor 26 moves past the feeder mechanism, the lower end of the cylinders 50 are closed off by contact with the imperforate conveyor surface. When a product cup moves into opposition with a flexible cylinder lower end, the cylinder end is released which allows the garlic cloves contained therein to feed into the cup.

The loaded product cups are conveyed away from the feeder mechanism until they are brought into opposition with a nozzle 28 where an air blast is triggered which removes the outer clove skins. The removed skins are blown into the space between the plate and the conveyor 26 where they are moved by an air stream to the vacuum stacks 60 and 62 for removal. As the conveyor moves about roller 56 the peeled cloves are dumped onto the finished product conveyor 35 for transport to a packaging station.

Although the apparatus and method of the invention have been described in connection with the removal of the outer inedible skins from garlic cloves, it has been found that the invention may also be advantageously employed in removing the outer skins of shallots or pearl onions.

## Claims

1. Apparatus for peeling the outer skin from garlic cloves, shallots or pearl onions, comprising: a feeder (18) for providing a continuous supply of cloves, shallots or pearl onions to a plurality of different outlets (50); a continuous belt (52) driven along a closed path having an upper surface located immediately adjacent the outlets (50), said belt including a large number of openings (58), each of which is aligned with an outlet of the feeder (18) as the belt moves along the path; individual cup means (24) positioned within the belt openings (58), each having an upwardly directed open top when located on the belt upper surface; a plate (30) located above and spaced from the upper surface of the belt (52) and extending parallel thereto, the plate (30) having a plurality of openings, cup means being brought into alignment with the openings in the plate as the belt moves past them; nozzle means (66) in each plate opening and actuatable for directing pressurized air into the cup means (24) and onto cloves, shallots or pearl onions contained therein; and means (32 and 34) for moving air along and outwardly of the space between the upper surface of the belt and the facing surface of the plate (30) to remove peeled outer skins.

2. Apparatus according to claim 1, characterised in that the plate (30) is located sufficiently close to the upper surface of the belt to prevent a clove from entering therebetween.

3. Apparatus according to claim 1 or 2, characterised in that means (66) are interconnected with a supply of air at a pressure of 65 to 80 pounds per square inch (450-550 kPa).

4. Apparatus according to claim 1, 2 or 3, characterised in that the nozzle means have an orifice of about 11/32 of an

4. Apparatus according to claim 1, 2 or 3, characterized in that the nozzle means have an orifice of about 11/32 of an inch (8.7mm) diameter.

5. Apparatus according to claim 1, 2 or 3, characterised in that the nozzle means have an orifice of about 5/16 of an inch (7.9mm) diameter.

6. Apparatus according to claim 1, 2, 3, 4 or 5 characterised in that the feeder includes a feed tray (18) for receiving cloves and arranging them in lines that are moved off a common edge (40); and a feeder mechanism (22) including a plurality of flexible open-ended cylindrical tubes (50), the upper end of each being aligned with and gravity fed by a respective line from the feed tray (18), and the lower end being compressed by contact with the upper surface of the belt (52) to contain cloves and being released from compression as the lower end moves over a cup means (24) which releases at least one clove into the said cup means (24).

7. Apparatus according to claim 6, characterised in that each cylindrical tube (50) is constructed of a generally rectangular sheet of flexible material rolled into a cylinder with overlapping lateral edge portions.

8. Apparatus according to claim 7, characterised in that each cylindrical tube (50) is secured onto an end of a rigid hollow tube (48), the rigid hollow tube being secured within an opening (46) in a mounting plate (42), the mounting plate (42) being located to receive cloves from the feed tray (18).

9. Apparatus according to claim 6, 7 or 8, characterised in that tray includes a sheetlike member formed into a plurality of parallel troughs (20) with upstanding walls (37) between

10. A method of removing the inedible outer skins from garlic cloves, shallots or small onions, which comprises the steps of locating one or more garlic cloves, shallots or pearl onions with outer skins intact within an open-top container; positioning a plate closely spaced to the container open top; and directing a pressurized air stream onto the garlic cloves, shallots or pearl onions of sufficient pressure and spacing to tumble the cloves about and remove the outer skins from the cloves.

11. A method according to claim 10, characterised in that the air is drawn from the space between the plate and the cup open top.

12. A method according to claim 10, characterised in that the pressurised air is in range of 60-80 pounds per square inch (450-550kpa).

FIG. 1

EP 0 401 955 A1

FIG.2

FIG.3

FIG.4a

FIG.4b

FIG.5a

FIG.5b

| Proximity Switch |

| Air Blast Control |

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2618982 (MENOU)<br>* page 5, line 26 - page 8, line 11; figure 5 * | 10, 11 | A23N15/08 |
| A | | 1 | |
| D,X | US-A-3485279 (PARSONS & SONS LTD.)<br>* column 1, line 40 - column 2, line 47 *<br>* column 9, lines 34 - 49 *<br>* column 10, lines 12 - 17 *<br>* column 12, lines 7 - 71 * | 10, 12 | |
| D,A | | 1 | |
| A | US-A-3861295 (BOYER)<br>* column 4, line 7 - column 45 * | 1, 10 | |
| A | US-A-4068011 (GREEN ET AL.)<br>* column 3, line 30 - column 8, line 23 * | 1 | |
| A | GB-A-1179408 (MARELA LTD. ET AL.)<br>* page 4, line 95 - page 5, line 23 * | 1, 10 | |
| A | US-A-4470345 (MIYATA) | | TECHNICAL FIELDS SEARCHED (Int. Cl.5 ) |
| D,A | US-A-3602279 (VAN RAAIJ) | | A23N |

The present search report has been drawn up for all claims

| Place of search | Date of completion of the search | Examiner |
|---|---|---|
| THE HAGUE | 17 SEPTEMBER 1990 | VAN OORSCHOT J.W.M. |